# EUROPEAN PATENT APPLICATION

(11) **EP 4 309 972 A1**
(43) Date of publication of application: **24.01.2024**
(21) Application number: 22770167.9
(22) Date of filing: 11.01.2022
(51) Int. Cl.: B62D 1/10

(54) **QUICK DISASSEMBLY ASSEMBLY FOR STEERING WHEEL AND STEERING COLUMN**

(30) Priority: 19.03.2021 CN 202110294903
(71) Applicant: Autoliv Development AB, 44783 Vargarda (SE)
(72) Inventor: GAO, Fengji, Shanghai 201807 (CN); LI, Naibin, Shanghai 201807 (CN); OUYANG, Jianxiong, Shanghai 201807 (CN); AN, Xiaochao, Shanghai 201807 (CN)
(74) Representative: Novagraaf International SA
(86) International application number: PCT/CN2022/071333
(87) International publication number: WO 2022/193805

(57) **Abstract**

A quick-disassembly assembly for a steering wheel (10) and a steering column (20), including a steering wheel shaft (1) and a connecting block (2), the steering wheel shaft (1) being disposed in an inner wall of the steering wheel (10), the connecting block (2) being connected to the steering column (20), and a guide slot (21) and a positioning block (22) being provided in the connecting block (2). When the steering wheel shaft (1) slides into the guide slot (21) and is positioned with the positioning block (22), the steering wheel (10) is connected to the steering column (20). When the steering wheel shaft (1) slides out from the guide slot (21), the steering wheel (10) is separated from the steering column (20). The connection between the steering wheel (10) and the steering column (20) is achieved by means of the connecting block (2). During connection, the steering wheel shaft (1) of the steering wheel (10) is slid into the guide slot (21) of the connecting block (2) and is positioned with the positioning block (22). During disassembly, the steering wheel shaft (1) is slid out of the guide slot (21), such that the disassembly of the steering wheel (10) and the steering column (20) may be achieved. The quick-disassembly assembly is simple to operate, and the quick disassembly and assembly of the steering wheel (10) and the steering column (20) can be achieved.

## Description

### TECHNICAL FIELD

The present invention relates to the technical field of automobiles, and in particular to a quick-disassembly assembly for a steering wheel and a steering column.

### BACKGROUND

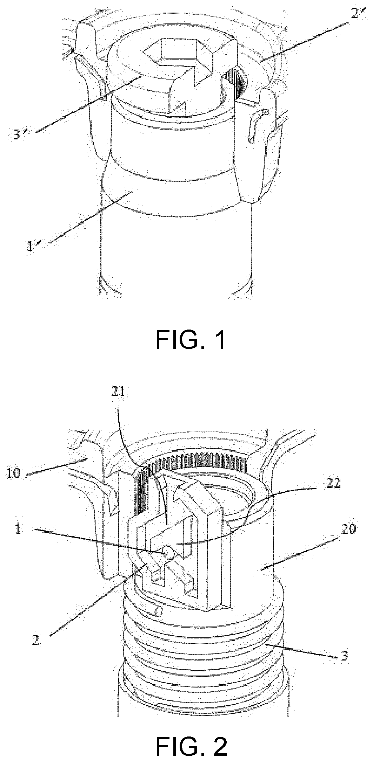

As shown in FIG. 1, when an existing steering wheel 2' is assembled with a steering column 1', it is necessary to fix the steering wheel 2' onto the steering column 1' by using a fixing bolt 3'. After the fixing bolt 3' is tightened, a DAB module (driver airbag module) is then assembled into the steering wheel 2'.

During assembly, a tool is required to assemble the steering wheel 2' into the steering column 1', and the DAB module needs to be delivered separately and then assembled after fixing the steering wheel 2'.

During disassembly, the DAB module needs to be removed before the fixing bolt 3' is disassembled, and finally, the steering wheel 2' and the steering column 1' are disassembled.

The mounting and disassembly of the structure in this way are relatively complicated, and the quick disassembly and assembly of the steering wheel and the steering column 1' cannot be achieved.

### SUMMARY

The objective of the present invention is to overcome the insufficiency of the prior art, and provide a printed circuit board fixing assembly for a steering wheel airbag, which is capable of fixing a printed circuit board without affecting demolding.

The technical solution of the present invention provides a quick-disassembly assembly for a steering wheel and a steering column, comprising a steering wheel shaft and a connecting block, the steering wheel shaft being disposed on an inner wall of the steering wheel, the connecting block being connected to the steering column, and a guide slot and a positioning block being provided in the connecting block;
when the steering wheel shaft slides into the guide slot and is positioned with the positioning block, the steering wheel is connected to the steering column; and
when the steering wheel shaft slides out from the guide slot, the steering wheel is separated from the steering column.

Further, a sliding slot is provided on the steering column, a sliding block extends out from a side surface of the connecting block, and the other side surface of the connecting block is provided with the positioning block and the guide slot; and
the sliding block is inserted into the sliding slot and is capable of moving in the sliding slot.

Further, the guide slot is formed between the positioning block and an edge of the connecting block, an upper end opening of the guide slot, and the steering wheel shaft slides into or out of the guide slot from the opening.

Further, a locking portion is provided below the positioning block, and when the steering wheel shaft slides into the guide slot and then enters the locking portion, the steering wheel is connected to the steering column.

When the steering wheel shaft disengages from the locking portion and slides out from the guide slot, the steering wheel is separated from the steering column.

Further, a connecting end of the steering column is sleeved with a spring, the connecting block is mounted above the spring, and the spring is in contact with a lower end of the steering wheel;
after the steering wheel shaft slides downward from the opening into the guide slot, the spring is compressed;
when the steering wheel shaft enters the locking portion, the spring presses the steering wheel shaft toward the locking portion; and
during a process in which the steering wheel shaft slides out of the guide slot from the opening, the spring pushes the steering wheel to move upward.

Further, the positioning block is of an inverted heart shape, and the locking portion is recessed upward.

Further, a downwardly recessed first guide slot is provided on the guide slot, the first guide slot is disposed below the locking portion, and the first guide slot is used for guiding the steering wheel shaft into the locking portion.

Further, a downwardly recessed second guide slot is further provided on the guide slot, the second guide slot is located at a rear section of the first guide slot and is located obliquely below the locking portion, and the second guide slot is used for guiding the steering wheel shaft out of the guide slot.

Further, an upwardly protruding guide slope is provided between the first guide slot and the second guide slot on the guide slot, and the guide slope guides the steering wheel shaft located in the locking portion into the second guide slot.

Further, a guide-in inclined surface and a lock hook are provided at the opening of the guide slot;
the steering wheel shaft enters the guide slot from the guide-in inclined surface; and
the steering wheel shaft is locked with the lock hook before sliding out of the guide slot, and after the steering wheel is pressed, the steering wheel shaft disengages from the lock hook and slides out of the guide slot.

The above technical solution can achieve the following beneficial effects:
in the present invention, the connection between the steering wheel and the steering column is achieved by means of the connecting block. During connection, the steering wheel shaft of the steering wheel is slid into the guide slot of the connecting block and is positioned with the positioning block. During disassembly, the steering wheel shaft is slid out of the guide slot, such that the disassembly of the steering wheel and the steering column may be achieved. It is simple to operate the quick-disassembly assembly in the present invention, and the quick disassembly and assembly of the steering wheel and the steering column can be achieved.

### BRIEF DESCRIPTION OF THE DRAWINGS

The disclosure of the present invention will become better understood with reference to the accompanying drawings. It should be understood that the drawings are for illustrative purposes only and are not intended to limit the scope of protection of the present invention. In the drawings:
FIG. 1 is a schematic diagram of the connection between an existing steering wheel and a steering column;
FIG. 2 is a schematic diagram of a quick-disassembly assembly in an embodiment of the present invention;
FIG. 3 is an exploded diagram of a quick-disassembly assembly in an embodiment of the present invention;
FIG. 4 is a schematic front view diagram of a connecting block in an embodiment of the present invention;
FIG. 5 is a schematic rear view diagram of the connecting block in an embodiment of the present invention;
FIG. 6 is a schematic diagram of a first step of a process of mounting a quick-disassembly assembly in an embodiment of the present invention;
FIG. 7 is a schematic diagram of a second step of the process of mounting the quick-disassembly assembly in an embodiment of the present invention;
FIG. 8 is a schematic diagram of a third step of the process of mounting the quick-disassembly assembly in an embodiment of the present invention;
FIG. 9 is a schematic diagram of a fourth step of the process of mounting the quick-disassembly assembly in an embodiment of the present invention;
FIG. 10 is a schematic diagram of a fifth step of the process of mounting the quick-disassembly assembly in an embodiment of the present invention;
FIG. 11 is a schematic diagram of a sixth step of the process of mounting the quick-disassembly assembly in an embodiment of the present invention;
FIG. 12 is a schematic diagram of a seventh step of the process of mounting the quick-disassembly assembly in an embodiment of the present invention;
FIG. 13 is a schematic diagram of an eighth step of the process of mounting the quick-disassembly assembly in an embodiment of the present invention;
FIG. 14 is a schematic diagram of a quick-disassembly assembly in an embodiment of the present invention when mounted in place;
FIG. 15 is a schematic diagram of a first step of a process of disassembling a quick-disassembly assembly in an embodiment of the present invention;
FIG. 16 is a schematic diagram of a second step of the process of disassembling the quick-disassembly assembly in an embodiment of the present invention;
FIG. 17 is a schematic diagram of a third step of the process of disassembling the quick-disassembly assembly in an embodiment of the present invention;
FIG. 18 is a schematic diagram of a fourth step of the process of disassembling the quick-disassembly assembly in an embodiment of the present invention;
FIG. 19 is a schematic diagram of a fifth step of the process of disassembling the quick-disassembly assembly in an embodiment of the present invention;
FIG. 20 is a schematic diagram of a sixth step of the process of disassembling the quick-disassembly assembly in an embodiment of the present invention;
FIG. 21 is a schematic diagram of a seventh step of the process of disassembling the quick-disassembly assembly in an embodiment of the present invention; and
FIG. 22 is a schematic diagram of a quick-disassembly assembly in an embodiment of the present invention when disassembled.

### Reference Numerals:

steering column 1', steering wheel 2', and fixing bolt 3';
steering wheel 10: mounting tube 101;
steering column 20: sliding slot 201, connecting end 202, and mounting platform 203;
steering wheel shaft 1;
connecting block 2: guide slot 21, positioning block 22, sliding block 23, opening 211, first guide slot 212, second guide slot 213, guide slope 214, guide-in inclined surface 215, lock hook 216, second guide-in surface 217, locking portion 221, and first guide-in surface 222;
spring 3.

### DETAILED DESCRIPTION

Specific embodiments of the present invention are described further below with reference to the accompanying drawings.

It may be easily understood that those of ordinary skills in the art may propose a plurality of interchangeable structural modes and implementation methods according to the technical solutions of the present invention without changing the essential spirit of the present invention. Therefore, the following specific embodiments and the accompanying drawings are merely exemplary description of the technical solutions of the present invention, and should not be regarded as the whole of the present invention or regarded as limitations to the technical solutions of the present invention.

The positional terms of up, down, left, right, before, behind, front, back, top, bottom, etc. which are referred to or possibly referred to in this specification are defined with respect to the configurations shown in the drawings, and the foregoing are relative concepts; therefore, the foregoing may possibly change correspondingly according to different positions thereof and different use states. Therefore, the foregoing or other positional terms should not be construed as restrictive terms.

In some embodiments of the present invention, as shown in FIGS. 2-3, a quick-disassembly assembly for a steering wheel 10 and a steering column 20 includes a steering wheel shaft 1 and a connecting block 2. The steering wheel shaft 1 is disposed on an inner wall of the steering wheel 10, the connecting block 2 is connected to the steering column 20, and a guide slot 21 and a positioning block 22 are provided in the connecting block 2.

When the steering wheel shaft 1 slides into the guide slot 21 and is positioned with the positioning block 22, the steering wheel 10 is connected to the steering column 20.

When the steering wheel shaft 1 slides out from the guide slot 21, the steering wheel 10 is separated from the steering column 20.

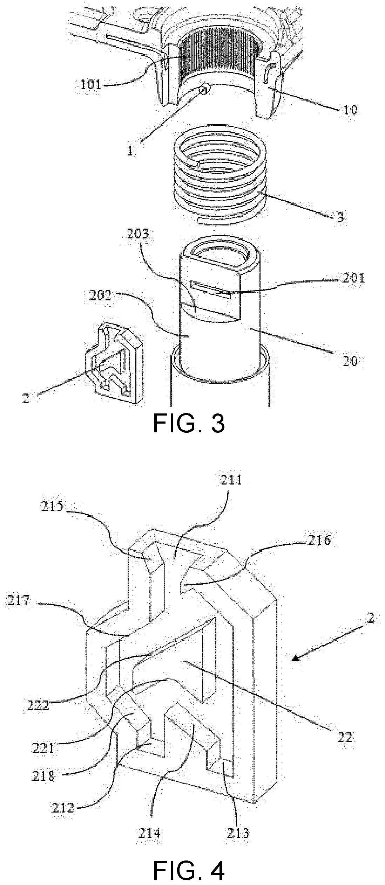

Specifically, the steering wheel 10 includes a cylindrical mounting tube 101, and the steering wheel shaft 1 is disposed on an inner wall of the mounting tube 101. To clearly see the steering wheel shaft 1, a part of the mounting tube 101 is cut away in FIGS. 2 and 3.

A connecting end 202 of the steering column 20 is generally cylindrical, the connecting end 202 is inserted into the mounting tube 101, a mounting platform 203 is provided on the connecting end 202, and the connecting block 2 is mounted on the mounting platform 203.

The steering wheel shaft 1 is a small cylinder, and can be inserted into the guide slot 21 of the connecting block 2. When the steering wheel shaft 1 is positioned with the positioning block 22, the steering wheel shaft 1 is not easily disengaged from the guide slot 21 of the connecting block 2. At this time, the steering wheel is connected to the steering column.

When the steering wheel 10 and the steering column 20 need to be disassembled, the steering wheel 10 is operated according to a particular direction and action, such that the steering wheel shaft 1 is separated from the positioning block 22 and slides out of the guide slot 21, thereby achieving the disassembly of the steering wheel 10 and the steering column 20.

In the present embodiment, the mounting and disassembly of the steering wheel 10 and the steering column 20 do not require tools, and can be achieved by only operating the steering wheel 10 in a specific manner. Moreover, in the foregoing disassembly means, it is not necessary to firstly disassemble a DAB module on the steering wheel 10, and directly separating the steering wheel 10 from the steering column 20 is sufficient. Therefore, the present embodiment simplifies operation and enables quick mounting or disassembly to be achieved.

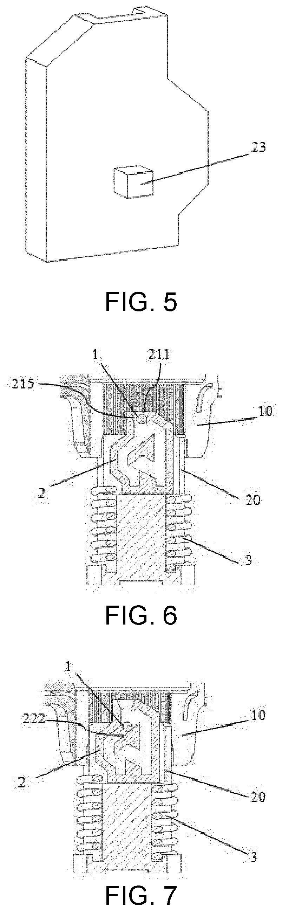

In some embodiments of the present invention, as shown in FIGS. 3 and 5, a sliding slot 201 is provided on the steering column 20, a sliding block 23 extends from a side surface of the connecting block 2, and the other side surface of the connecting block 2 is provided with the positioning block 22 and the guide slot 21.

The sliding block 23 is inserted into the sliding slot 201 and is capable of moving in the sliding slot 201.

Specifically, the sliding slot 201 is provided on the mounting platform 203, and the sliding slot 201 is arranged along a lateral direction. The sliding block 23 is located at the back side of the connecting block 2, and after the sliding block 23 is inserted into the sliding slot 201, the sliding block can move left and right along the sliding slot 201.

During mounting and disassembly of the steering wheel 10, when the steering column 20 does not move, and the steering wheel 10 moves up and down, the steering wheel 10 drives the connecting block 2 to move left and right along the sliding slot 201 while sliding in the guide slot 21, such that the steering wheel shaft 1 can smoothly slide in the guide slot 21.

Optionally, the connecting block 2 is not limited to moving along the lateral direction, that is, the sliding slot 201 is not limited to being arranged along the lateral direction, and may be of other shapes.

In some embodiments of the present invention, as shown in FIG. 4, the guide slot 21 is formed between the positioning block 22 and an edge of the connecting block 2, an upper end opening (211) of the guide slot 21, and the steering wheel shaft 1 slides into or out of the guide slot 21 from the opening 211.

The positioning block 22 is disposed in the center of the guide slot 21, the guide slot 21 is disposed around the positioning block 22, and the steering wheel shaft 1 slides around the positioning block 22 in the guide slot 21.

Further, as shown in FIG. 4, a locking portion 221 is provided below the positioning block 22, and when the steering wheel shaft 1 slides into the guide slot 21 and then enters the locking portion 221, the steering wheel 10 is connected to the steering column 20.

When the steering wheel shaft 1 disengages from the locking portion 221 and slides out of the guide slot 21, the steering wheel 10 is separated from the steering column 20.

Specifically, the locking portion 221 is located below the positioning block 22 and is recessed upward. After the steering wheel shaft 1 slides from the opening 211 into the guide slot 21, the steering wheel shaft 1 slides downward into the locking portion 221 along the guide slot 21. When no force is applied to the steering wheel shaft 1, the locking portion 221 can hold the steering wheel shaft 1 in the foregoing position. At this time, the steering wheel 10 is connected to the steering column 20 in a relatively stable state.

When the steering wheel 10 needs to be disassembled, a force is applied to the steering wheel 10, the steering wheel 10 is pushed downward, such that the steering wheel shaft 1 is disengaged from the locking portion 221, and then the steering wheel shaft 1 is pushed upward along the guide slot 21 and finally slides out of the opening 211.

Further, as shown in FIGS. 2-3, the connecting end of the steering column 20 is sleeved with a spring 3, the connecting block 2 is mounted above the spring 3, and the spring 3 is in contact with a lower end of the steering wheel 10.

After the steering wheel shaft 1 slides downward from the opening 211 into the guide slot 21, the spring 3 is compressed.

When the steering wheel shaft 1 enters the locking portion 221, the spring 3 presses the steering wheel shaft 1 toward the locking portion 221.

During a process in which the steering wheel shaft 1 slides out of the guide slot 21 from the opening 211, the spring 3 pushes the steering wheel 10 to move upward.

The spring 3 can press the steering wheel shaft 1 against the locking portion 221, such that the steering wheel shaft 1 can be held in the locking portion 221. During disassembly, the spring 3 can also push the steering wheel shaft 1 to quickly slide out of the guide slot 21. The spring 3 can also further have a shock absorbing effect on the steering wheel 10 and reduce noise generated during the mounting and disassembly of the steering wheel 10.

Further, as shown in FIG. 4, the positioning block 22 is of an inverted heart shape, and the locking portion 221 is recessed upward.

Specifically, the positioning block 22 further includes a first guide-in surface 222, and the guide slot 21 is provided with a second guide-in surface 217 corresponding to the first guide-in surface 222.

After the steering wheel shaft 1 enters the guide slot 21 from the opening 211, the steering wheel shaft 1 is guided downward by means of the first guide-in surface 222 and the second guide-in surface 217.

The guide slot 21 is further provided with a third guide-in surface 218, and the third guide-in surface 218 continues to guide the steering wheel shaft 1 downward.

Further, as shown in FIG. 4, a downwardly recessed first guide slot 212 is provided on the guide slot 21, the first guide slot 212 is disposed below the locking portion 221, and the first guide slot 212 is used for guiding the steering wheel shaft 1 into the locking portion 221.

After the steering wheel shaft 1 enters the first guide slot 212 along the third guide-in surface 218, when the steering wheel 10 is released, under the action of the spring 3, the steering wheel shaft 1 moves upward, enters the locking portion 221 from the first guide slot 212, and then is pressed into the locking portion 221 by the spring 3.

Further, as shown in FIG. 4, a downwardly recessed second guide slot 213 is further provided on the guide slot 21, the second guide slot 213 is located in a rear section of the first guide slot 212 and is located obliquely below the locking portion 221, and the second guide slot 213 is used for guiding the steering wheel shaft 1 out of the guide slot 21.

When the steering wheel 10 is pressed downward again, the steering wheel shaft 1 slides out from the locking portion 221 and then downwardly enters the second guide slot 213.

A section of the guide slot above the second guide slot 213 is generally along a longitudinal direction. Therefore, after the steering wheel 10 is released, under the action of the spring 3, the steering wheel shaft 1 moves upward from the second guide slot 213, and slides out toward the opening 211.

Further, as shown in FIG. 4, an upwardly protruding guide slope 214 is provided between the first guide slot 212 and the second guide slot 213 on the guide slot 21, and the guide slope 214 guides the steering wheel shaft 1 that is located in the locking portion 221 into the second guide slot 213. The highest point of the guide slope 214 corresponds to the highest point of the locking portion 221 (i.e., the most upwardly recessed point).

When the steering wheel shaft 1 is disengaged from the locking portion 221, the steering wheel shaft 1 slides into the second guide slot 213 from top to bottom along the guide slope 214.

Further, as shown in FIG. 4, a guide-in inclined surface 215 and a lock hook 216 are provided at the opening 211 of the guide slot 21.

The steering wheel shaft 1 enters the guide slot 21 from the guide-in inclined surface 215.

The steering wheel shaft 1 is locked with the lock hook 216 before sliding out of the guide slot 21, and after the steering wheel 10 is pressed, the steering wheel shaft 1 disengages from the lock hook 216 and slides out of the guide slot 21.

The guide-in inclined surface 215 and the lock hook 216 are oppositely arranged at the opening 211, the steering wheel shaft 1 slides downward from the guide-in inclined surface 215 into the guide slot 21, and the guide-in inclined surface 215 facilitates the steering wheel shaft 1 quickly entering the guide slot 21.

When the steering wheel shaft 1 slides upward from the second guide slot 213, the steering wheel shaft first snaps into the lock hook 216, and the lock hook 216 prevents the steering wheel shaft 1 from disengaging from the guide slot 21 due to misoperation.

After the steering wheel 10 is pressed again, the steering wheel 10 drives the steering wheel shaft 1 to disengage from the lock hook 216 and finally slide out of the guide slot 21 from the opening 211.

Referring to FIGS. 6-14, in a preferred embodiment of the present invention, a process of mounting the steering wheel 10 and the steering column 20 is as follows:

as shown in FIG. 6, the steering wheel 10 is pressed downward, and the steering wheel 10 drives the steering wheel shaft 1 to enter the guide slot 21 from the opening 211 along the guide-in inclined surface 215.

As shown in FIG. 7, the steering wheel shaft 1 slides from the guide-in inclined surface 215 onto the first guide-in surface 222 of the positioning block 22.

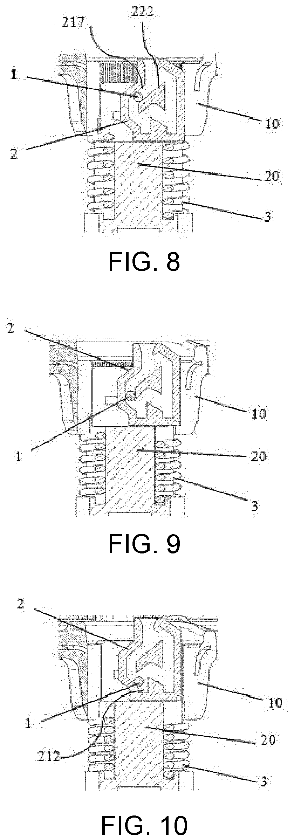

As shown in FIG. 8, the steering wheel shaft 1 continues to slide downward along the first guide-in surface 222 and the second guide-in surface 217.

As shown in FIGS. 9-11, the steering wheel shaft 1 slides into the first guide slot 212.

During the process from FIG. 6 to FIG. 11, the steering wheel 10 is pushed downward, and the steering wheel 10 continuously compresses the spring 3.

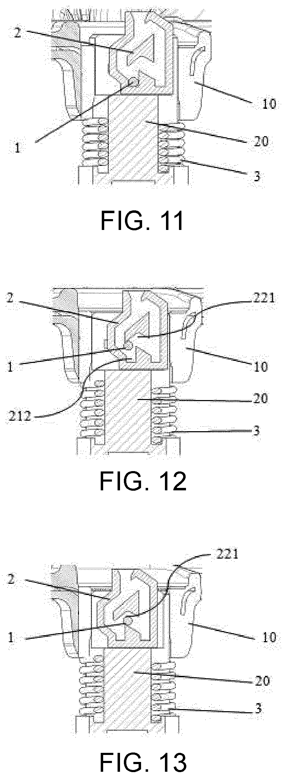

As shown in FIGS. 12-13, the steering wheel 10 is released, the spring 3 pushes the steering wheel 10 to move upward, and the steering wheel shaft 1 enters the locking portion 221 from the first guide slot 212.

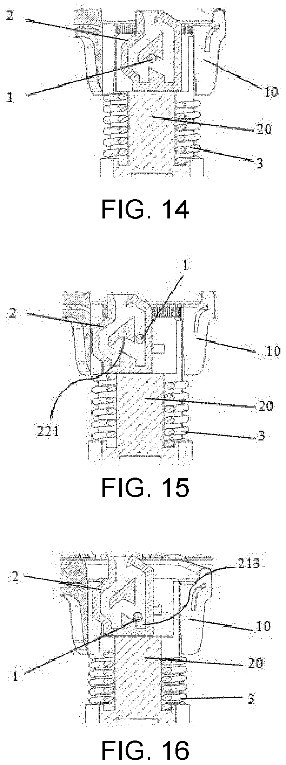

As shown in FIG. 14, the spring 3 compresses the steering wheel shaft 1 into the locking portion 221, and when the steering wheel 10 is not acted upon by an external force, the steering wheel shaft 1 is maintained in the locking portion 221, such that the steering wheel 10 and the steering column 20 are maintained in a relatively stable connection state.

Referring to FIGS. 15-22, in a preferred embodiment of the present invention, a process of disassembling the steering wheel 10 and the steering column 20 is as follows:
when the steering wheel 10 needs to be disassembled, as shown in FIG. 15, the steering wheel 10 is pressed downward again, and the steering wheel 10 drives the steering wheel shaft 1 to disengage from the locking portion 221.

As shown in FIGS. 16-17, the steering wheel 10 is continually pressed downward, and the steering wheel shaft 1 downwardly enters the second guide slot 213.

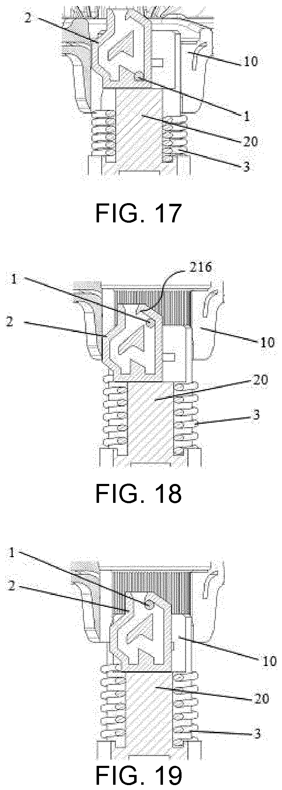

Then, the steering wheel 10 is again released. As shown in FIGS. 18-19, the steering wheel shaft 1 is pushed by the spring 3, slides upward from the second guide slot 213, enters the lock hook 216, and is blocked by the lock hook 216.

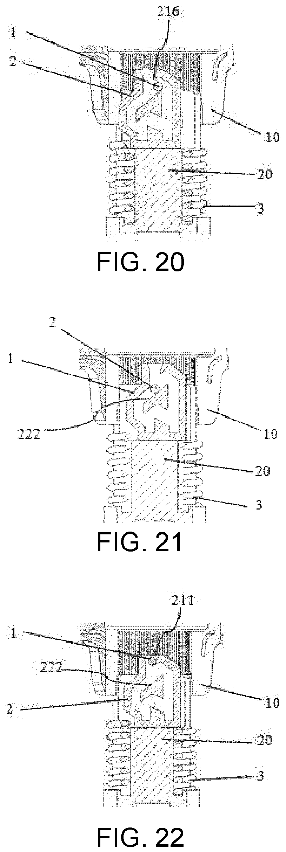

As shown in FIG. 20, the steering wheel 10 is again pressed downward, and the steering wheel shaft 1 disengages from the lock hook 216.

As shown in FIG. 21, the steering wheel shaft 1 slides to the first guide-in surface 222 of the positioning block 2.

As shown in FIG. 22, the steering wheel 10 is again released, and under the action of the spring 3, the steering wheel shaft 1 slides upward out of the opening 211 from the first guide-in surface 222, and disengages from the guide slot 21, achieving the disassembly of the steering wheel 10 and the steering column 20.

In the present embodiment, the steering wheel shaft 1 enters from the opening 211, slides in a circle around the positioning block 22 along the guide slot 21, and then slides out from the opening 211, achieving the entire process from mounting to disassembly. The above operations are repeated when it is necessary to mount and disassemble again.

In the present embodiment, the mounting and disassembly of the steering wheel 10 do not require the use of other tools, nor do the foregoing require the removal of the DAB module on the steering wheel 10. The mounting and disassembly can be achieved by only pressing down and releasing the steering wheel 10. The quick-disassembly assembly is simple to operate and easy to implement, and can be quickly mounted and disassembled.

The shape and structure of the guide slot and the positioning block in the present invention, and the means of operation of the steering wheel during mounting and disassembly, are not limited to the contents disclosed in the embodiments, and other variant embodiments are also possible.

The above description is merely illustrative of the principles and preferred embodiments of the present invention. It should be noted that other variations can be made by those of ordinary skill in the art on the basis of the principles of the present invention, and such variations should be construed as falling within the scope of protection of the present invention.

## Claims

1. A quick-disassembly assembly for a steering wheel and a steering column, **characterized by** comprising a steering wheel shaft (1) and a connecting block (2), the steering wheel shaft (1) being disposed in an inner wall of the steering wheel (10), the connecting block (2) being connected to the steering column (20), and a guide slot (21) and a positioning block (22) being provided in the connecting block (2);
when the steering wheel shaft (1) slides into the guide slot (21) and is positioned with the positioning block (22), the steering wheel (10) is connected to the steering column (20); and
when the steering wheel shaft (1) slides out from the guide slot (21), the steering wheel (10) is separated from the steering column (20).

2. The quick-disassembly assembly for a steering wheel and a steering column according to claim 1, wherein a sliding slot (201) is provided on the steering column (20), a sliding block (23) extends out from a side surface of the connecting block (2), and the other side surface of the connecting block (2) is provided with the positioning block (22) and the guide slot (21); and
the sliding block (23) is inserted into the sliding slot (201) and is capable of moving in the sliding slot (201).

3. The quick-disassembly assembly for a steering wheel and a steering column according to claim 1, wherein the guide slot (21) is formed between the positioning block (22) and an edge of the connecting block (2), an upper end opening (211) of the guide slot (21), and the steering wheel shaft (1) slides into or out of the guide slot (21) from the opening (211).

4. The quick-disassembly assembly for a steering wheel and a steering column according to claim 3, wherein a locking portion (221) is provided below the positioning block (22), and when the steering wheel shaft (1) slides into the guide slot (21) and then enters the locking portion (221), the steering wheel (10) is connected to the steering column (20); and
when the steering wheel shaft (1) disengages from the locking portion (221) and slides out from the guide slot (21), the steering wheel (10) is separated from the steering column (20).

5. The quick-disassembly assembly for a steering wheel and a steering column according to claim 4, wherein a connecting end (202) of the steering column (20) is sleeved with a spring (3), the connecting block (2) is mounted above the spring (3), and the spring (3) is in contact with a lower end of the steering wheel (10);
after the steering wheel shaft (1) slides downward from the opening (211) into the guide slot (21), the spring (3) is compressed;
when the steering wheel shaft (1) enters the locking portion (221), the spring (3) presses the steering wheel shaft (1) toward the locking portion (221); and
during a process in which the steering wheel shaft (1) slides out of the guide slot (21) from the opening (221), the spring (3) pushes the steering wheel (10) to move upward.

6. The quick-disassembly assembly for a steering wheel and a steering column according to claim 4, wherein the positioning block (22) is of an inverted heart shape, and the locking portion (221) is recessed upward.

7. The quick-disassembly assembly for a steering wheel and a steering column according to claim 4, wherein a downwardly recessed first guide slot (212) is provided on the guide slot (21), the first guide slot (212) is disposed below the locking portion (221), and the first guide slot (212) is used for guiding the steering wheel shaft (1) into the locking portion (221).

8. The quick-disassembly assembly for a steering wheel and a steering column according to claim 7, wherein a downwardly recessed second guide slot (213) is further provided on the guide slot (21), the second guide slot (213) is located at a rear section of the first guide slot (212) and is located obliquely below the locking portion (221), and the second guide slot (213) is used for guiding the steering wheel shaft (1) out of the guide slot (21).

9. The quick-disassembly assembly for a steering wheel and a steering column according to claim 8, wherein an upwardly protruding guide slope (214) is provided between the first guide slot (212) and the second guide slot (213) on the guide slot (21), and the guide slope (214) guides the steering wheel shaft (1) located in the locking portion (221) into the second guide slot (213).

10. The quick-disassembly assembly for a steering wheel and a steering column according to claim 3, wherein a guide-in inclined surface (215) and a lock hook (216) are provided at the opening (211) of the guide slot (21);
the steering wheel shaft (1) enters the guide slot (21) from the guide-in inclined surface (215); and
the steering wheel shaft (1) is locked with the lock hook (216) before sliding out of the guide slot, and after the steering wheel (10) is pressed, the steering wheel shaft (1) disengages from the lock hook (216) and slides out of the guide slot (21).
